# EUROPÄISCHE PATENTSCHRIFT

(11) **EP 0 513 719 B1**
(45) Veröffentlichungstag und Bekanntmachung des Hinweises auf die Patenterteilung: **28.12.1994**
(21) Anmeldenummer: 92107935.6
(22) Anmeldetag: 12.05.1992
(51) Int. Cl.: C09J 7/02

(54) **Doppelseitiges Klebeband**
Double surfaced adhesive tape
Ruban adhésif double face

(30) Priorität: 15.05.1991 DE 4115840
(43) Veröffentlichungstag der Anmeldung: 19.11.1992
(73) Patentinhaber: Klauss, Günter, D-72664 Kohlberg (DE)
(72) Erfinder: Klauss, Günter, D-72664 Kohlberg (DE)
(74) Vertreter: Rüger, Rudolf, Dr.-Ing.

(56) Entgegenhaltungen:
- US-A- 4 442 152

## Beschreibung

Die Erfindung betrifft ein doppelseitiges Klebeband mit den Merkmalen des Oberbegriffs des Anspruches 1.

Wenn bei aneinander angrenzenden Bereichen einer der Bereiche eine Oberflächenbehandlung erhält und der andere Bereich von der Oberflächenbehandlung nicht betroffen sein soll, wird üblicherweise dieser nicht zu behandelnde Bereich abgedeckt. Zum Abdecken wird, soweit es sich nur um schmale streifenförmige Flächen handelt, die geschützt werden müssen, einseitig klebendes Band verwendet. Je größer der Streifen ist, umso breiter muß das Klebeband gewählt werden. Bei sehr großen zu schützenden Flächen kann diese Vorgehensweise unwirtschaftlich sein und es werden stattdessen Doppelklebebänder verwendet, die unmittelbar längs der Grenzlinien zwischen dem zu behandelnden und dem unbehandelten Bereich verklebt werden. Auf der Rückseite dieses verlegten Doppelklebebandes wird anschließend eine Folie aufgeklebt, die selbst keinerlei Kleberbeschichtung hat.

Um Doppelklebeband auf eine Rolle aufwickeln zu können, ist die Zwischenlage eines Schutzpapiers oder einer Schutzfolie erforderlich, die benachbarte Lagen der Rolle voneinander trennt und die nur gering auf der Klebstoffschicht des Doppelklebebandes haftet. Nach dem Verlegen des Doppelklebebandes muß die Folie abgezogen werden, was problematisch ist, wenn die Klebstoffschicht über die gesamte Breite der Rückseite des Doppelklebebandes verläuft. Unter Umständen kommt noch ein Schnittgrat hinzu und es besteht kaum eine Möglichkeit, leicht mit einem Werkzeug zwischen Schutzfolie und Doppelklebeband zu gelangen, um die Schutzfolie abzuziehen, obwohl sie nur gering auf der Klebstoffschicht haftet.

Wenn mit Doppelklebeband und Schutzfolie gearbeitet wird, muß für gewöhnlich die Schutzfolie, die straff über den zu schützenden Bereich gespannt wird, zurecht geschnitten werden. Wenn sie über das Doppelklebeband randseitig übersteht, würde sie auch Teile des zu bearbeitenden Bereiches verdecken. Besonders schwierig wird das Abschneiden des überstehenden Folienteils, wenn die Anordnung in einem Winkel ausläuft, beispielsweise bei einem zu schützenden Fensterstock gegenüber der Fensterlaibung.

Zum Wickeln von Spulen für Transformatoren und Drosseln ist es aus der DE-OS 2 034 800 bekannt, die streifenförmige Isolationsfolie zur Wicklungsisolation auf einer Seite mit einer selbstklebenden Beschichtung zu versehen. Diese Beschichtung ist lediglich in einem sich über die Längsrichtung der Zwischenlage erstreckenden Streifen angebracht, der schmäler ist als es der Breite der Wicklungszwischenlage entspricht. In den neben dem Klebstoffstreifen angrenzenden Randbereichen ist die Wicklungszwischenlage gefiedert, um sich besser anzuschmiegen.

Ein doppelseitig beschichtetes Markierungsklebeband, in dem die Klebstoffschichten magnetische Partikel enthalten, ist auch aus US-A-4 442 152 bekannt.

Ausgehend hiervon ist es Aufgabe der Erfindung, ein Doppelklebeband zu schaffen, das eine leichtere Handhabung beim Beschneiden der Folie und dem Abziehen der Schutzfolie zeigt.

Zur Lösung dieser Aufgabe weist das erfindungsgemäße doppelseitige Klebeband die Merkmale des Anspruches 1 auf.

Weil auf beiden Seiten des Klebstoffstreifens jeweils zwei Streifen in Längsrichtung des Trägers frei von Klebstoff sind, kann die Schutzfolie unabhängig davon, in welcher Richtung der Klebestreifen verklebt wurde, leicht angehoben werden, da die Kante der Schutzfolie mit dem eigentlichen Klebeband nicht stoffschlüssig verbunden ist. Durch leichtes Darüberfahren mit der Fingerkuppe richtet sich sofort die Schutzfolie auf und kann dann ohne weiteres ergriffen werden.

Außerdem kann leicht die mit Hilfe des doppelseitigen Klebebandes verklebte Abdeckfolie angehoben und mit einem scharfen Messer zurechtgeschnitten werden. Dabei kommt es auf einen exakten Schnittverlauf nicht an, da die gerade Kante von dem Klebeband selbst gebildet wird. Die Abdeckfolie kann irgendwo zwischen dem Rand des Klebebandes und dem mit Klebstoff versehenen Streifen, also im Bereich des klebstofffreien Streifens beliebig krummlinig verlaufen.

In der Praxis hat es sich als günstig erwiesen, wenn die Breite des mit Klebstoff versehenen Streifens etwa die Hälfte der Breite des Trägers ± 25%, bezogen auf die Breite des Streifens, ausmacht.

Wenn die beiden klebstofffreien Streifen gleich breit sind, ergibt sich eine symmetrische Gestalt des Klebebandes und es kann sowohl mit der einen als auch mit der anderen Kante längs der Grenzlinie zwischen dem zu schützenden und dem zu bearbeitenden Bereich verklebt werden, ohne daß sich an der Handhabung etwas ändert.

Wäre nur ein klebstofffreier Streifen vorhanden, dann könnte beispielsweise beim Abkleben eines Türrahmens der Handwerker das Klebeband nur auf einer Seite von unten nach oben verkleben, während er auf der anderen Seite von oben nach unten abkleben müßte, was im allgemeinen etwas schwieriger von der Hand geht als die andere Kleberichtung.

In der Zeichnung ist ein Ausführungsbeispiel des Gegenstandes der Erfindung dargestellt. Es zeigen:
- Fig. 1: das doppelseitige Klebeband in einer perspektivischen abgebrochenen Darstellung unter Veranschaulichung der einzelnen Schichten und
- Fig. 2: die Verwendung des doppelseitigen Klebebandes beim Abkleben eines Rahmens ein einer Laibung.

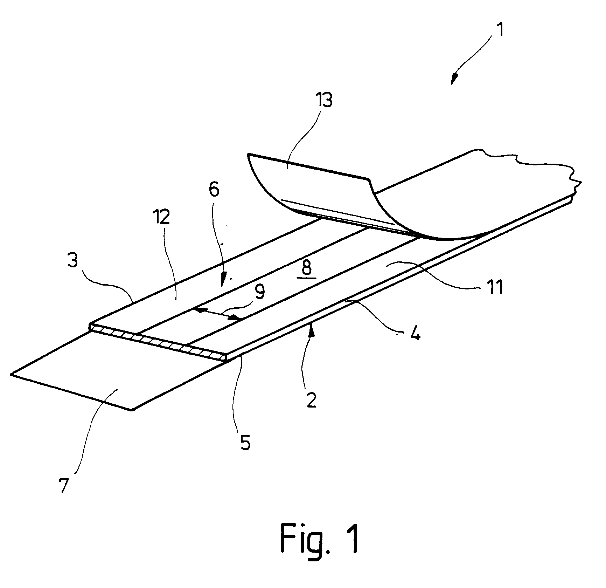

In Fig. 1 ist ein doppelseitiges Klebeband 1 veranschaulicht, das einen bandförmigen Träger 2 aufweist. Der Träger 2 ist von zwei Rändern 3, 4 begrenzt, die über die gesamte Länge des Klebebandes 1 denselben Abstand haben und im abgewickelten Zustand, wenn der Träger 2 eben liegt, gerade sind.

Der bandförmige Träger 2 hat eine Dicke von ca. 0,05 mm oder weniger und weist eine dem abzudeckenden Bereich zugekehrte Vorderseite 5 sowie einevon dem abzudeckenden Bereich wegweisende Rückseite 6 auf. Die Vorderseite 5 ist über ihre gesamte Breite und Länge mit einer selbsthaftenden Klebstoffschicht 7 versehen, mit deren Hilfe der bandförmige Träger 2 auf einer Unterlage aufzukleben ist. Auch die Rückseite 6 trägt einen selbsthaftenden Klebstoff 8, der sich jedoch nur in einem streifenförmigen Bereich, wie er durch einen Doppelpfeil 9 gekennzeichnet ist, erstreckt. Der streifenförmige Bereich 9 ist deutlich schmäler als die Breite des bandförmigen Trägers 2, also der Abstand zwischen dessen beiden Rändern 3 und 4. Der mit Klebstoff 8 versehene Streifen 9 liegt etwa mittig auf der Rückseite 6, wodurch zwei von Klebstoff freie Streifen 11 und 12 auf der Rückseite 6 zustandekommen. Die beiden von Klebstoff freien Streifen 11 und 12 gehen über die gesamte Länge des Klebebandes 1 durch. Sie haben eine Breite von wenigstens 3 bis 6 mm.

Die Breite des mit Klebstoff 8 versehenen Streifens 9 beträgt etwa die Hälfte der Breite des bandförmigen Trägers 2 ± 25%, bezogen auf die Breite des Streifens 9.

Um das Doppelklebeband 1 auf einer Rolle zu einer Endlosware aufwickeln zu können, ist eine mit Silikon versehene Schutzfolie oder ein Schutzpapier 13 vorhanden, das eine Breite entsprechend der Breite des Trägers 2 aufweist. Es haftet nach dem Verkleben des doppelseitigen Klebebandes 1 nur noch mit Hilfe des Klebstoffes 8 des Streifens 9. Nach dem Verkleben des doppelseitigen Klebebandes 1 kann sich durch leichtes Anstoßen an der Kante die Schutzfolie 13 in dem nicht verklebten Bereich des Streifens 11 oder 12 aufstellen und leicht von Hand ergriffen werden.

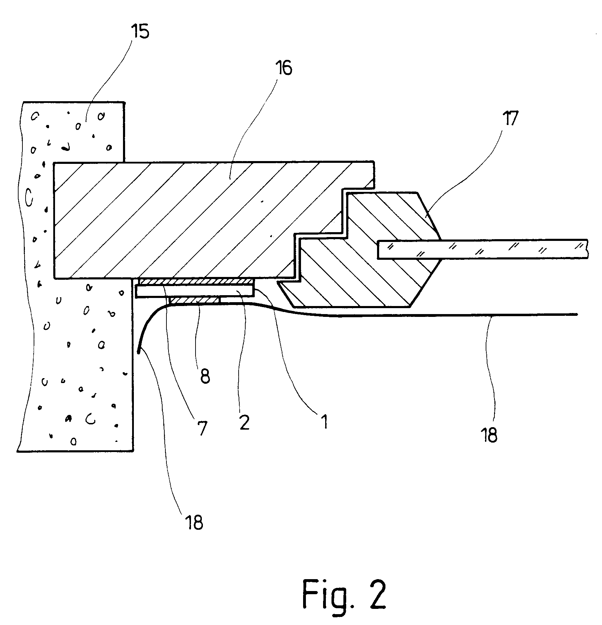

Die Anwendung des neuen doppelseitigen Klebebandes sei im folgenden anhand von Fig. 2 erläutert: Ein in eine Laibung 15 eingemauerter Rahmen 16 für einen Fensterflügel 17 soll auf der Innenseite gegen Verunreinigung geschützt werden, wenn die Laibung 15 gestrichen oder gespritzt werden soll. Im letzteren Fall ist die vollständige Abdeckung des Fensterflügels 17 einschließlich des Rahmens 16 erforderlich. Um dies zu erreichen, wird auf der Innenseite des Rahmens 16 das neue Doppelklebeband 1 aufgeklebt, und zwar so, daß es mit einem seiner beiden Ränder 3, 4 an der Laibung 15 anstößt. Das Aufkleben auf dem Rahmen 16 geschieht mit Hilfe der Klebstoffschicht 7, also der Vorderseite 5, so daß das doppelseitige Klebeband 1 vollflächig und über die gesamte Länge selbsthaftend mit dem Fensterrahmen 16 verklebt ist. Während dieses Vorganges trägt das doppelseitige Klebeband 1 auf seiner Rückseite 6 die Schutzfolie 13. Nach dem Verkleben des doppelseitigen Klebebandes 1 ist die der Laibung 15 zugekehrte Kante 3 oder 4 nicht mehr zugänglich, jedoch kann an der anderen Kante ohne weiteres mit einem Werkzeug oder mit den Fingern die Schutzfolie 13 zusammengedrückt werden, weil sie in dem klebstofffreien Streifen 11 nicht haftet. Beim Zusammendrücken richtet sie sich auf und kann von Hand ergriffen und sodann von der Rückseite 6 abgezogen werden. Anschließend wird eine dünne Abdeckfolie 18 über den Fensterflügel 17 sowie den Rahmen 16 gespannt und auf dem Streifen 9 des Klebebandes 1 verklebt. Da im allgemeinen die Breite der Abdeckfolie 18 nicht mit der Fensterbreite übereinstimmt, wird nach dem Verkleben der Abdeckfolie 18 ein Randstreifen 19 übrig bleiben, der an der Laibung 15 anliegt. Mit Hilfe eines scharfen Messers kann der Randstreifen 19 ohne weiteres abgeschnitten werden, wobei es nicht darauf ankommt, daß die Schnittkante nach dem Abtrennen des Randstreifens 19 gerade verläuft. Es genügt, wenn die Schnittkante innerhalb des entsprechenden klebstofffreien Streifens 11 bzw. 12 zu liegen kommt, da die scharfe Randbegrenzung durch das Klebeband 1 selbst gebildet wird. Wegen des klebstofffreien Streifens 11 bzw. 12 ist die Führung des Messers wesentlich vereinfacht, da die Abdeckfolie 18 mit Hilfe des Randstreifens 19 angehoben werden kann und entsprechend der Breite des klebstofffreien Streifens 11 oder 12 bis hin zu dem Streifen 9 von der Laibung 15 entfernt werden kann. Dadurch entsteht ein deutlicher, ausreichend breiter Spalt zwischen dem Randstreifen 19 und der entsprechenden Fläche der Laibung 15, wodurch nicht die Gefahr besteht, daß mit dem Messer in die Fläche der Laibung 15 eingeschnitten wird, was entweder das Messer oder die entsprechende Fläche beschädigt. Außerdem wird hierdurch die Schnittkante ohne weiteres so gelegt, daß nach dem Abtrennen des Randbereiches 19 keine Teile der Abdeckfolie 18 mehr an der Laibung 15 aufliegen, wenn dicht, aber nicht unmittelbar an dem Klebstoff 8 enthaltenden Streifen 9 entlang geschnitten wird.

Für das Abziehen des Klebebandes 1 ist es günstig, wenn der Träger 2 eine reißfeste PVC-Folie ist.

## Patentansprüche

1. Doppelseitiges Klebeband (1) mit einem bandförmigen, zwei zueinander parallele Ränder (3, 4) aufweisenden Träger (2), der auf seinen beiden Seiten (5, 6) mit einem selbstklebenden Klebstoff (7, 8) versehen ist, wobei sich der Klebstoff (7) auf der einen Seite (5) über die gesamte Breite dieser Seite (5) erstreckt, dadurch gekennzeichnet, daß der Klebstoff (8) auf der anderen Seite (6) auf einen über die Länge des Trägers (2) durchgehenden Streifen (9) beschränkt ist, der schmäler ist als der Träger (2) und daß der Träger (2) beidseits des Streifens (9) frei von Klebstoff (8) ist, derart, daß unmittelbar an die Ränder (3, 4) angrenzende klebstofffreie Streifen (11, 12) ausgebildet sind.

2. Klebeband nach Anspruch 1, dadurch gekennzeichnet, daß die Breite des mit Klebstoff versehenen Streifens (9) die Hälfte der Breite des Trägers (2) ± 25%, bezogen auf die Breite des Streifens (9), ausmacht.

3. Klebeband nach Anspruch 1, dadurch gekennzeichnet, daß die beiden klebstofffreien Streifen (11, 12) gleich breit sind.

4. Klebeband nach Anspruch 1, dadurch gekennzeichnet, daß die beiden klebstofffreien Streifen (11, 12) wenigstens 3 mm, vorzugsweise zumindest 6 mm breit sind.

5. Klebeband nach Anspruch 1, dadurch gekennzeichnet, daß es zu einer Rolle aufgewickelt ist und daß benachbarte Windungen der Rolle durch eine dazwischen liegende bandförmige Schutzfolie (13) voneinander getrennt sind, die an dem Klebstoff (7, 8) des Klebebandes (1) nur geringfügig haftet.

6. Klebeband nach Anspruch 5, dadurch gekennzeichnet, daß die Schutzfolie (13) Silikon enthält.

7. Klebeband nach Anspruch 1, dadurch gekennzeichnet, daß der Träger (2) eine Folie ist.

8. Klebeband nach Anspruch 7, dadurch gekennzeichnet, daß der Träger (2) eine PVC-Folie ist.

## Claims

1. Double-sided adhesive tape (1) including a tape carrier (2) having two edges (3, 4) arranged parallel to one another, with one of the two edges (5, 6) being coated with a self-adhesive adhesive (7, 8) with said adhesive (7) running on one side (5) across the full width of said side (5), characterized in that said adhesive (8) is limited on the other side (6) to a strip (9), running over the length of the carrier (2), being narrower than the carrier (2), and the carrier (2) being free of adhesive (8) on both sides of the strip (9) forming adhesive-free strips (11, 12) immediately along the edges (3, 4).

2. Adhesive tape according to claim 1, characterized in that the width of the strip (9) coated with adhesive is half the width of the carrier (2) of +/- 25% in relation to the width of the strip (9).

3. Adhesive tape according to claim 1, characterized in that both adhesive-free strips (11, 12), are of equal width.

4. Adhesive tape according to claim 1, characterized in that, both adhesive-free strips (11, 12) are no less than 3 mm and preferably no less than 6 mm wide.

5. Adhesive tape according to claim 1, characterized in that it is wound on a roll and that adjacent windings on the roll are separated by a tape-shaped backing film (13), only adhering mildly to the adhesive (7, 8) of the adhesive tape (1).

6. Adhesive tape according to claim 5, characterized in that the protective backing film (13) is silicon-based.

7. Adhesive tape according to claim 1, characterized in that the carrier (2) is a film.

8. Adhesive tape according to claim 7, characterized in that the carrier (2) is a PVC film.

## Revendications

1. Ruban adhésif (1) double face comportant un support (2) en forme de ruban qui comporte deux bords (3, 4) mutuellement parallèles et est pourvu sur ses deux faces (5, 6) d'un adhésif (7, 8) spontanément collant, l'adhésif s'étendant sur une face (5) sur l'ensemble de la largeur de ladite face (5), caractérisé par le fait que sur l'autre face (6), l'adhésif (8) est limité à une bande (9) continue qui s'étend sur toute la longueur du support (2) et est plus étroite que ledit support (2) et par le fait que, de part et d'autre de ladite bande (9), le support (2) ne comporte pas d'adhésif (8), de telle sorte que des bandes (11, 12) exemptes d'adhésif immédiatement voisines des bords (3, 4) sont formées.

2. Ruban adhésif selon la revendication 1, caractérisé par le fait que la largeur de la bande (9) pourvue d'adhésif représente la moitié du support (2) ± 25 % rapporté à la largeur de la bande (9).

3. Ruban adhésif selon la revendication 1, caractérisé par le fait que les deux bandes (11, 12) exemptes d'adhésif ont même largeur.

4. Ruban adhésif selon la revendication 1, caractérisé par le fait que les deux bandes (11, 12) exemptes d'adhésif ont une largeur d'au moins 3 mm, de préférence d'au moins 6 mm.

5. Ruban adhésif selon la revendication 1, caractérisé par le fait qu'il est enroulé en rouleau et par le fait que des tours contigus sont séparés par un film protecteur (13) en forme de ruban disposé entre deux qui n'adhère que faiblement sur l'adhésif (7, 8) du ruban adhésif (1).

6. Ruban adhésif selon la revendication 5, caractérisé par le fait que le film protecteur (13) contient du silicone.

7. Ruban adhésif selon la revendication 1, caractérisé par le fait que le support (2) est un film.

8. Ruban adhésif selon la revendication 7, caractérisé par le fait que le support (2) est un film de PVC.
